# EUROPEAN PATENT APPLICATION

(11) **EP 1 686 711 A2**
(43) Date of publication of application: **02.08.2006**
(21) Application number: 06000194.8
(22) Date of filing: 05.01.2006
(51) Int. Cl.: H04H 1/00

(54) **Method and system for conditional access in digital multimedia broadcasting**

(30) Priority: 06.01.2005 KR 2005001236
(71) Applicant: Samsung Electronics Co., Ltd., Yeongtong-gu Suwon-si, Gyeonggi-do (KR)
(72) Inventor: Yoo, Hoon, Yeongtong-gu Suwon-si Gyeonggi-do (KR)
(74) Representative: Grünecker, Kinkeldey, Stockmair & Schwanhäusser Anwaltssozietät

(57) **Abstract**

A digital multimedia broadcasting (DMB) conditional access system (CAS) for solving the difficulty in providing an adequate broadcasting signal by installing repeaters in shadow areas and restricting reception billing to only the subscribers in the shadow areas. The CAS includes first and second communication networks; a mobile terminal for reproducing a DMB signal; a repeater for scrambling a transport stream (TS) received from a DMB transmission tower and transmitting the scrambled TS to the mobile terminal; and a server for providing a key for the scrambling to the repeater through the first communication network and to the mobile terminal through the second communication network.

## Description

The present invention relates generally to a Digital Multimedia Broadcasting (DMB) receiving system, and in particular, to a system for solving the difficulty in watching the broadcasting by installing repeaters in shadow areas and restricting reception billing to only the subscribers in the shadow areas, and a method therefor.

A Conditional Access System (CAS) provides a broadcasting station that radiates radio waves on a charged basis and performs scrambling before transmitting broadcasting signals. A reception side descrambles received broadcasting signals so only the authorized subscriber can watch the broadcasting.

The CAS cannot be applied when the broadcasting station has a charge-free broadcasting policy. For example, a terrestrial DMB broadcasting station, which radiates radio waves on a charge-free basis, has no reason to introduce the CAS. Therefore, when there is a need for billing for some reasons, it is necessary to appropriately implement the CAS so as to continue the charge-free broadcasting oriented policy of the terrestrial DMB broadcasting station for viewers in non-shadow areas.

The radio waves radiated by the broadcasting station cannot cover the full service area, causing the broadcast signal not to be received in certain places. Such a place is called a shadow area. For example, the shadow area may include the space within a subway or the space between skyscrapers. In the shadow area, there is a need for a separate technical counterplan to solve the impediment to watching the broadcast. To this end, it is necessary to incur an expense for installation and maintenance of the corresponding apparatus, and the users should inevitably bear some of the expense. To do so, there is a demand for a method for distinguishing subscribers desiring to watch the broadcast of the broadcasting station from non-subscribers, giving only the subscribers an authority to watch the broadcast, and charging these subscribers for the authority.

It is, therefore, the object of the present invention to provide a Conditional Access System (CAS) for solving the difficulty in providing adequate broadcasting signal in a digital multimedia broadcasting (DMB) shadow area and billing only the subscribers in the shadow area, and a method therefor.

This object is solved by the invention as claimed in the independent claims.

Preferred embodiments are defined in the dependent claims.

In accordance with one aspect of the present invention, there is provided a conditional access system (CAS) for digital multimedia broadcasting (DMB). The CAS includes first and second communication networks; a mobile terminal for reproducing a DMB signal; a repeater for scrambling a transport stream (TS) received from a DMB transmission tower and transmitting the scrambled TS to the mobile terminal; and a server for providing a key for the scrambling to the repeater through the first communication network and to the mobile terminal through the second communication network.

In accordance with another aspect of the present invention, there is provided a method for processing, by a mobile terminal, a digital multimedia broadcasting (DMB) signal received directly from a transmission tower or received from a repeater. The method includes checking whether a received transport stream (TS) is a scrambled TS upon receiving a DMB signal; if the received TS is a scrambled TS, checking whether there is any scrambling key previously stored therein; and if there is any scrambling key, descrambling the scrambled TS using the scrambling key.

The above and other objects, features and advantages of the present invention will become more apparent from the following detailed description when taken in conjunction with the accompanying drawings in which:
FIG. 1 is a diagram illustrating a configuration of a Digital Multimedia Broadcasting (DMB) Conditional Access System (CAS) according to a preferred embodiment of the present invention;
FIG 2 is a diagram illustrating a partial configuration of FIG 1 and a detailed structure of the repeater;
FIG. 3 is a ladder diagram illustrating a DMB service subscription process between a mobile terminal and a server according to a preferred embodiment of the present invention;
FIG. 4 is a flowchart illustrating a process of receiving and processing DMB signals in a mobile terminal according to a preferred embodiment of the present invention;
FIG. 5 is a ladder diagram illustrating a DMB service subscription expiration process between a mobile terminal and a server according to a preferred embodiment of the present invention; and
FIG. 6 is a ladder diagram illustrating a DMB service subscription termination process between a mobile terminal and a server according to a preferred embodiment of the present invention.

A preferred embodiment of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for conciseness.

A Conditional Access System (CAS) according to a preferred embodiment of the present invention solves the difficulty in watching the broadcast by installing repeaters in shadow areas, and allows the repeaters to scramble the signals received directly from a Digital Multimedia Broadcasting (DMB) station or received from a repeater tower of the broadcasting station, before transmission, so that only the authorized subscribers can descramble received signals and watch the broadcast. With the implementation of the CAS, non-subscribers having no watching authority cannot perform the descrambling and thus cannot watch the broadcast. Therefore, there is no need to bill the non-subscribers, and the CAS can bill only the subscribers. Because the billing is not related to the inventive aspect of the present invention, a detailed description thereof will be omitted herein for simplicity.

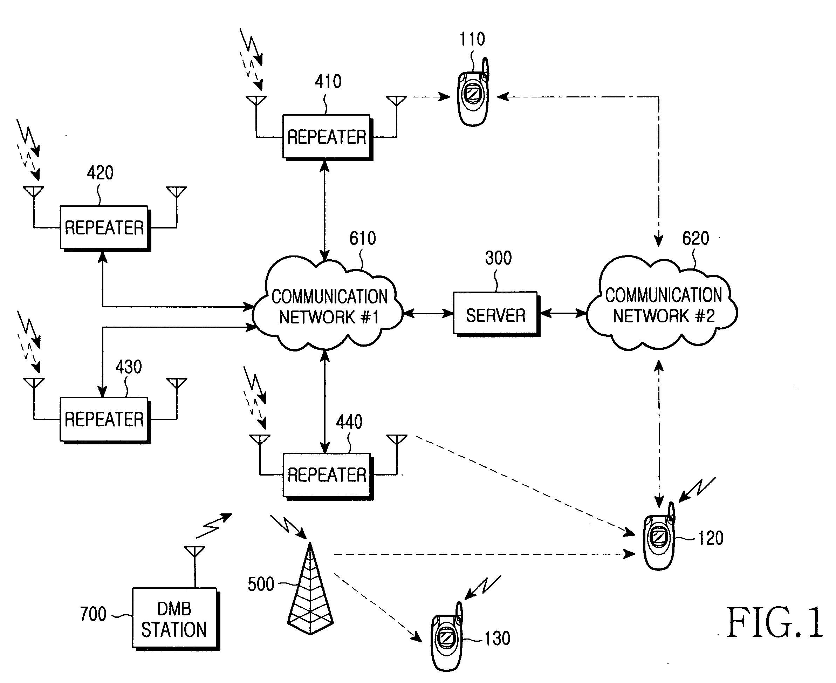

FIG. 1 is a diagram illustrating a configuration of a DMB CAS according to a preferred embodiment of the present invention. Mobile terminals 110, 120 and 130 can be implemented with dedicated terminals for reproducing DMB, or mobile phones or personal digital assistants (PDAs) having the DMB function. The mobile terminal 110 represents a terminal, subscribed to a DMB service and located in a shadow area. The mobile terminal 120 represents a terminal, subscribed to the DMB service and located in a non-shadow area. The mobile terminal 130 represents a terminal, not-subscribed to the DMB service.

Repeaters 410 to 440 scramble the signals received directly from a DMB station 700 or received from a repeater tower (or transmission tower) 500 of the DMB station 700, and transmit the scrambled signals over the air.

A server 300 generates a scrambling key. The server 300 provides the same scrambling key to the repeaters 410 to 440 via a first communication network 610 and to the mobile terminals 110 and 120 via a second communication network 620. Because the inventive aspect of the present invention does not consist in the method of transmitting the scrambling key and there are various possible methods, a detailed description thereof will be omitted herein for simplicity.

The scrambling key provided by the server 300 is classified into per-day, per-week, per-month, and per-year scrambling keys according to a subscription type. For example, if a user subscribes to the DMB service for one month, he/she can be provided with 30 or 31 per-day scrambling keys (28 or 29 per-day scrambling keys in the case of February) from the server 300. If the user is provided with the per-day scrambling keys in this manner, the server 300 can settle per-day billing. For example, if the user requests termination of the DMB service 3 days after the subscription, the server 300 can sum up billing amounts of the first day, the second day, and the third day.

The server 300 is designed such that it checks whether users of the mobile terminals 110 and 120 are authorized users (i.e., DMB subscribers) before providing a scrambling key to the mobile terminals 110 and 120, and provides the scrambling key to the mobile terminals 110 and 120 only when the users are authorized users or DMB subscribers. The scrambling key includes time information (e.g., date and time) and a unique value. Based on the time information, the mobile terminal 110 or 120 can perform descrambling using a scrambling key corresponding to a desired date among a plurality of scrambling keys (that the mobile terminal 110 or 120 has been provided from the server 300 and has stored therein. In the case of per-week subscription, the mobile terminal 110 or 120 stores 7 scrambling keys therein).

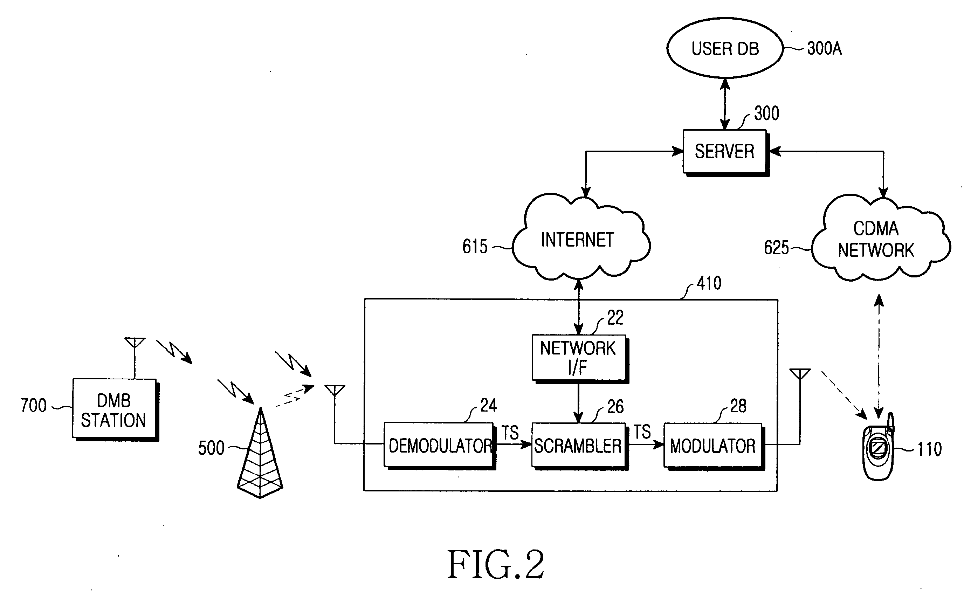

If the mobile terminal 110 or 120 requests subscription to the server 300, the server 300 stores user information of the mobile terminal 110 or 120 in a user database (DB). The server 300 can store the user information either in its user DB (300A in FIG. 2) or in a user DB (not shown) of another server. In addition, the server 300 is designed such that upon receiving a subscription termination request message from the mobile terminal 110 or 120, it deletes the corresponding user information from the user DB and settles per-day billing.

The first communication network 610 is one of a Code Division Multiple Access (CDMA) network, a Global System for Mobile communication (GSM) network, a General Packet Radio Service (GPRS) network, a Wideband CDMA (WCDMA) network, a wired network, a high-speed portable Internet (HPi) network, and a dedicated network. As a specific example, although the Internet 615 can be used as the first communication network 610 as shown in FIG. 2, the dedicated network or the CDMA network may be used when security is required. The second communication network 620 is one of the CDMA network, the GSM network, the GPRS network, the WCDMA network, and the HPi network.

The illustrated solid line with bidirectional arrows represents a wired line or a wireless line. A dotted line or solid line with a unidirectional arrow and a double dotted line with bidirectional arrows represent wireless lines.

It is preferable to fundamentally prevent occurrence of the case where the mobile terminal 120 simultaneously receives a broadcasting signal from the repeater 440 and a broadcasting signal from the transmission tower 500 or a broadcasting signal provided directly from the DMB station 700. Alternatively, it is preferable to use the mobile terminal 120 only in the area distinguishable at its radio frequency (RF) stage.

FIG. 2 is a diagram illustrating a partial configuration of FIG 1 and a detailed structure of the repeater. A description will now be made of an operation in which a broadcasting signal transmitted through a transmission tower 500 is delivered to a mobile terminal 110 subscribed to a DMB service, located in a shadow area, and then is reproduced in the mobile terminal 110.

A broadcasting signal transmitted directly from a DMB station 700 or transmitted through the transmission tower 500 of the DMB station 700 is received at a repeater 410 installed in the shadow area. The repeater 410 includes a network interface (I/F) 22 for interfacing with the Internet 615, a demodulator 24 for demodulating a signal received from the transmission tower 500 into a transport stream (in this embodiment, Moving Picture Expert Group-2 (MPEG-2) transport stream (TS)), a scrambler 26 for scrambling the TS, and a modulator 28 for modulating the scrambled TS and transmitting the modulated TS over the air.

The mobile terminal 110 receives a broadcasting signal over the air, analyzes a scrambling flag included in a header of a TS to determine whether the broadcasting signal has been received from the transmission tower 500 or received from the repeater 410 (i.e., whether the TS has been scrambled) and determines whether to perform descrambling according to the analysis result. However, it is assumed herein that the DMB station 700 does not use a scrambling-related flag in the TS header.

The mobile terminal 110, after transmitting a DMB service subscription request to the server 300, receives a scrambling key from the server 300 via a CDMA network 625 and stores the received scrambling key. The mobile terminal 110 descrambles the scrambled TS with the scrambling key stored therein. However, if the mobile terminal 110 has no scrambling key, it can transmit a scrambling key request to the server 300. The CDMA network 625 will serve as a security network for delivering the scrambling key.

The mobile terminal 110 further includes a billing DB (not shown), and is designed such that if the mobile terminal 110 transmits an access request message to the server 300 and receives a subscription expiration notification message from the server 300 in response thereto, it initializes the billing DB and informs its user of the subscription expiration.

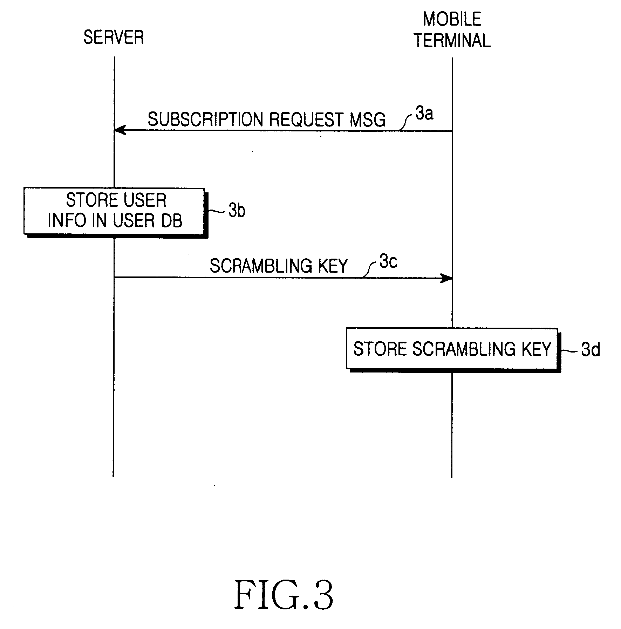

FIG 3 is a ladder diagram illustrating a DMB service subscription process between a mobile terminal and a server according to a preferred embodiment of the present invention. In step 3a, a mobile terminal 110 transmits a subscription request message to a server 300. Upon receiving the subscription request message, the server 300 stores user information of the mobile terminal 110 in a user DB 300A in step 3b. In step 3c, the server 300 transmits a plurality of scrambling keys (for example, one key for one day, or seven keys for one week) according to subscription type. In step 3d, the mobile terminal 110 receives and stores the scrambling keys.

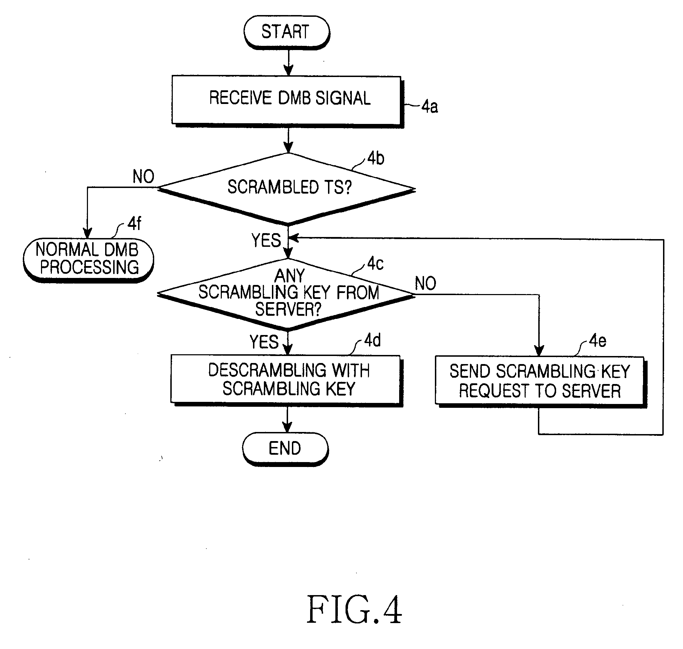

FIG. 4 is a flowchart illustrating a process of receiving and processing DMB signals in a mobile terminal according to a preferred embodiment of the present invention. In step 4a, a mobile terminal 110 receives a DMB signal and demodulates the DMB signal into a TS. The mobile terminal 110 checks in step 4b whether the demodulated TS is a scrambled TS. By doing so, upon power-on, the mobile terminal 110 can determine whether it is currently located in a shadow area. The mobile terminal 110 can determine whether the demodulated TS is a scrambled TS by analyzing a status of a scrambling flag included in a header of the TS. If the demodulated TS is not a scrambled TS, the mobile terminal 110 proceeds to step 4f where it performs the general DMB processing.

However, if it is determined that the demodulated TS is a scrambled TS, the mobile terminal 110 checks in step 4c whether there is any scrambling key received from a server 300. If there is a scrambling key, the mobile terminal 110 descrambles the scrambled TS using the scrambling key in step 4d. However, if there is no scrambling key, the mobile terminal 110 transmits a scrambling key request to the server 300 in step 4e, and then returns to step 4c. Upon receiving the scrambling key request from the mobile terminal 110, the server 300 accesses a user DB 300A and determines whether a user of the mobile terminal 110 is an authorized user. If it is determined that the user is an authorized user, the server 300 provides the request scrambling key to the mobile terminal 110 on a private basis, using a copy protection technique or other suitable means.

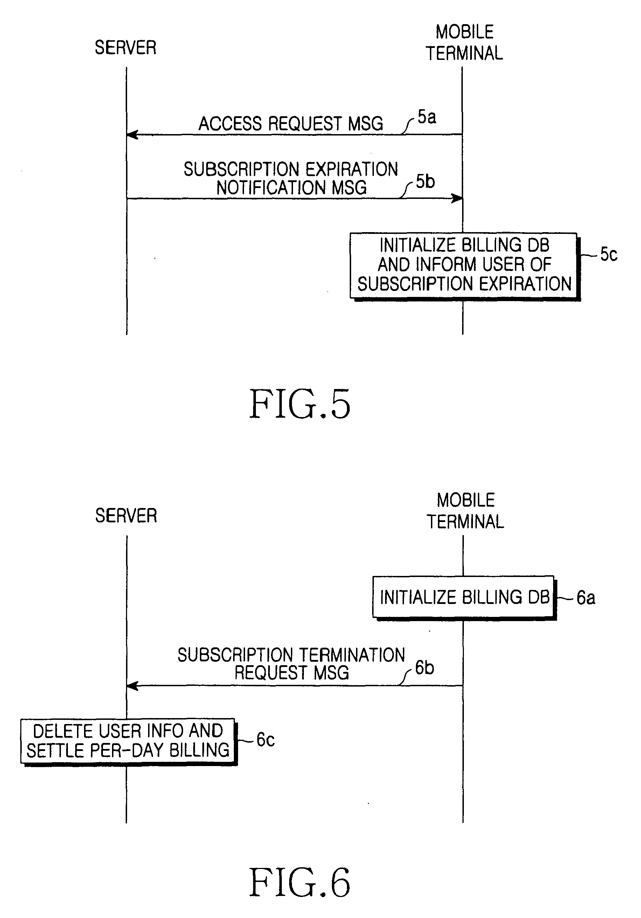

FIG 5 is a ladder diagram illustrating a DMB service subscription expiration process between a mobile terminal and a server according to a preferred embodiment of the present invention. In some cases, a user may attempt to receive a DMB service even though his/her subscription term has expired. Therefore, if a mobile terminal 110 transmits an access request to a server 300 after expiration of a subscription term, the server 300 informs the mobile terminal 110 of the subscription expiration. A detailed description thereof will be made herein below.

In step 5a, the mobile terminal 110 transmits an access request message to the server 300. Upon receiving the access request message, the server 300 checks user information of the mobile terminal 110. If it is determined that a subscription term of the corresponding user has expired, the server 300 transmits a subscription expiration notification message to the mobile terminal 110 in step 5b. Upon receiving the subscription expiration notification message, the mobile terminal 110 initializes a billing DB and informs the user of the subscription expiration using voice information or visual information in step 5c.

FIG. 6 is a ladder diagram illustrating a DMB service subscription termination process between a mobile terminal and a server according to a preferred embodiment of the present invention. A mobile terminal 110 initializes a billing DB in step 6a, and transmits a subscription termination request message to a server 300 in step 6b. Upon receiving the subscription termination request message, the server 300 deletes user information in a user DB 300A and settles per-day billing in step 6c. Because the server 300 generates scrambling keys for individual days, one by one, the server 300 can bill a user for at least one day even though the user terminates the subscription immediately after the subscription. In this manner, it is possible to prevent a fraudulent user from avoiding the billing by repeating subscription and termination every day.

Because the scrambling method used herein is not related to the inventive aspect of the present invention, a detailed description thereof will be omitted herein for simplicity. There are various possible scrambling methods, and they can be used independently of the present invention. For example, a scrambling method such as Data Encryption Standard (DES) can be used. In this case, the mobile terminal should prepare a descrambling method for the DES.

As can be understood from the foregoing description, the novel CAS can solve the difficulty in watching the broadcasting by installing repeaters in DMB shadow areas and can bill only the users in the shadow areas. That is, the CAS can give a watching authority to only the DMB subscribers in the shadow areas, bill the DMB subscribers, and prevent non-subscribers from receiving the DMB service.

While the invention has been shown and described with reference to a certain preferred embodiment thereof, it will be understood by those skilled in the art that various changes in form and details may be made therein without departing from the scope of the invention as defined by the appended claims.

## Claims

1. A conditional access system, CAS, for digital multimedia broadcasting, DMB, comprising:
first and second communication networks;
a mobile terminal for reproducing a DMB signal;
a repeater for scrambling a transport stream received from a DMB transmission tower and transmitting the scrambled transport stream to the mobile terminal; and
a server for providing a key for the scrambling to the repeater through the first communication network and to the mobile terminal through the second communication network.

2. The conditional access system of claim 1, wherein the first communication network is one of a Code Division Multiple Access, CDMA, network, a Global System for Mobile communication, GSM, network, a General Packet Radio Service, GPRS, network, a Wideband CDMA, WCDMA, network, a wired network, a high-speed portable Internet, HPi, network, and a dedicated network.

3. The conditional access system of claim 1 or 2, wherein the second communication network is one of a Code Division Multiple Access, CDMA, network, a Global System for Mobile communication, GSM, network, a General Packet Radio Service, GPRS, network, a Wideband CDMA, WCDMA, network, and a high-speed portable Internet, Hpi, network.

4. The conditional access system of one of claims 1 to 3, wherein the server further comprises a user database for storing user information.

5. The conditional access system of one of claims 1 to 4, wherein the mobile terminal analyzes a header of a TS demodulated from a received broadcasting signal to determine whether the broadcasting signal has been received from a DMB station or the repeater, and determines whether to perform descrambling according to the analysis result.

6. The conditional access system of claim 5, wherein the mobile terminal descrambles the scrambled TS demodulated from the broadcasting signal received from the repeater using a scrambling key provided from the server.

7. The conditional access system of claim 6, wherein if there is no scrambling key, the mobile terminal transmits a scrambling key request to the server.

8. The conditional access system of one of claims 1 to 7, wherein the server generates a scrambling key per predetermined time and provides the scrambling key to the mobile terminal and the repeater.

9. The conditional access system of one of claims 1 to 8, wherein before providing the scrambling key to the mobile terminal, the server checks whether a user of the mobile terminal is an authorized user, and provides the scrambling key to the mobile terminal if the user is an authorized user.

10. The conditional access system of one of claims 1 to 9, wherein the scrambling key includes time information and a unique value.

11. The conditional access system of one of claims 1 to 10, wherein the server further comprises a user database, and stores user information of the mobile terminal in the user database upon receiving a request for subscription to the server from the mobile terminal.

12. The conditional access system of one of claims 1 to 11, wherein the mobile terminal receives and stores the scrambling key provided from the server after transmitting a request for subscription to the server.

13. The conditional access system of one of claims 1 to 12, wherein the mobile terminal further includes a billing database, initializes the billing database upon receiving a subscription expiration notification message from the server after transmitting an access request message to the server, and informs a user of the subscription expiration.

14. The conditional access system of claim 11, wherein upon receiving a subscription termination request message from the mobile terminal, the server deletes corresponding user information from the user database, and settles per-day billing.

15. The conditional access system of one of claims 1 to 14, wherein the repeater comprises:
a network interface for interfacing with the first communication network;
a demodulator for demodulating a broadcasting signal received from the DMB transmission tower into a transport stream;
a scrambler for scrambling the demodulated transport stream; and
a modulator for modulating the scrambled transport stream and transmitting the modulated transport stream to the mobile terminal over the air.

16. The conditional access system of claim 15, wherein the repeater is installed in a shadow area.

17. A method for processing, by a mobile terminal, a digital multimedia broadcasting, DMB, signal received directly from a transmission tower or received from a repeater, the method comprising the steps of:
upon receiving a DMB signal, checking whether a received transport stream is a scrambled transport stream;
if the received transport stream is a scrambled transport stream, checking whether there is any scrambling key previously stored therein; and
if there is a scrambling key, descrambling the scrambled transport stream using the scrambling key.

18. The method of claim 17, wherein the scrambling key includes time information, and is equivalent to a scrambling key generated by a server and provided to the repeater.

19. The method of claim 17 or 18, further comprising transmitting a scrambling key request to the server if there is no scrambling key,

20. The method of one of claims 17 to 19, further comprising initializing, by the mobile terminal, a billing database and informing a user of subscription expiration upon receiving a subscription expiration notification from the server after transmitting an access request to the server.

21. The method of one of claims 17 to 20, further comprising deleting, by the server, user information from a user database and settling per-day billing upon receiving a subscription termination request from the mobile terminal.
